# EUROPEAN PATENT APPLICATION

(11) **EP 4 656 899 A1**
(43) Date of publication of application: **03.12.2025**
(21) Application number: 25382544.2
(22) Date of filing: 29.05.2025
(51) Int. Cl.: F16F 1/06, F16F 1/12, F16F 1/04, F16F 1/44

(54) **CONJUNTO DE MUELLE TENSOR**

(30) Priority: 31.05.2024 ES 202431031 U
(71) Applicant: Bultzaki, S.L., 01103 Vitoria-Gasteiz (ES)
(72) Inventor: SAIZ LANDA, Alfonso, Vitoria-Gasteiz (ES); ECENARRO CURTO, Gorka, Vitoria-Gasteiz (ES)
(74) Representative: Isern Patentes y Marcas S.L.

(57) **Abstract**

The present invention relates to a tension spring assembly, comprising a compression spring (10); and one or two wire ties (11) having a rectangular cross-section, housed in the compression spring (10), and provided with a first end (13), which is closed, and protrudes from one end of the compression spring (10); and a second end (14), open at two hooks (15), for hooking onto the other end of the compression spring (10).

## Description

### Technical field

The present invention belongs to the field of mechanical engineering, and specifically to the field of mechanical components such as springs. The present invention may also belong to the field of solar energy. More specifically, the invention relates to a tension spring assembly that, according to a non-limiting preferred application, makes it possible to stabilise solar panels.

### Background

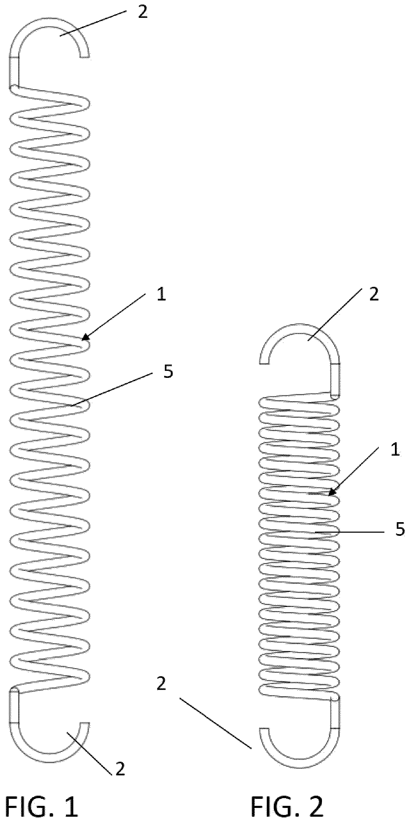

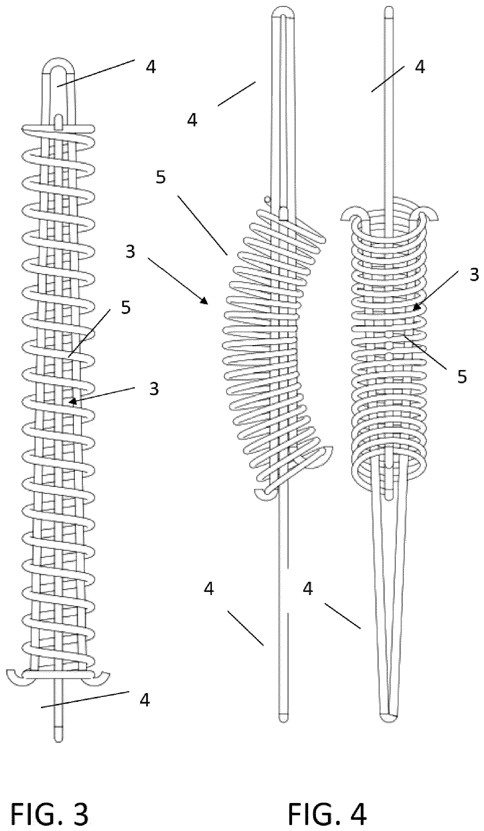

Figures 1-4 describe conventional solutions for stabilising solar panels. To date, solar panels have been stabilised using tension springs (1) with hooks (2), see figures 1-2, or compression springs (3) with wire ties (4) having a circular cross-section, see figures 3-4. In many other cases, neither of these solutions is used, with the resulting problem of breakage of the panels during strong winds.

On the one hand, tension springs (1) currently in use for this application have the following limitations:
- They are not able to withstand the stresses to which they are subjected, resulting in deformation of both the hooks (2) and the spring (1) itself, as well as relaxation and premature breakage of the hooks (2).
- Protection against corrosion is not optimal, as the contact points between coils (5), as well as the inside of the spring (1), cannot be painted since there is no optimum access to do so. This would lead to inadequate protection, leading to early corrosion and malfunctioning of traditional springs.

On the other hand, compression springs (3) with ties having a circular cross-section (4) are used to overcome the aforementioned problems of tension springs (1) for this application. Nevertheless, compression springs (3) with ties having a circular cross-section (4) suffer from buckling (figures 4-5). Buckling is a phenomenon of elastic instability that may occur in slender compressed elements and it is generated by the appearance of displacements transverse to the main direction of compression, producing uncontrolled plastic deformations in the coils (5) and, therefore, loss of strength of the compression springs (3), which reduces the ability to stabilise solar panels. Furthermore, buckling generates friction between the compression spring (3) and the ties (4), causing erosion of the coating, which is not able to withstand the environmental conditions required for the application.

### Description of the invention

The present invention solves the aforementioned drawbacks of the prior art by means of a tension spring assembly according to independent claim 1. Other optional advantageous features are described in the dependent claims and in the detailed description.

The assembly is noteworthy because its use of compression springs increases the ability to withstand between 24% and 55% more stress than traditional tension springs made with the same wire diameter, making it possible to support higher loads without deformation, minimising relaxation and increasing the number of life cycles, especiallywith regard to breakages produced in the hooks of traditional tension springs. This advantage allows for a lighter design than the current solutions mentioned in the state of the art.

Another major advantage of the invention lies in the possibility of painting both the interior and exterior areas of the spring, as well as the areas between coils, in a homogeneous and controlled manner, thus guaranteeing correct coating, protection and useful life of the spring against the environmental risks to which these mechanisms for solar panels are exposed.

### Brief description of the figures

The foregoing and other advantages and features will be more fully understood from the following detailed description of exemplary embodiments with reference to the accompanying drawings, which should be considered by way of illustration and not limitation, wherein:
Figures 1 and 2 show respective front views of a conventional tension spring, in a functional state (figure 1) and a free state (figure 2).
Figure 3 shows a profile image of a conventional compression spring assembly with a tie having a circular cross-section.
Figure 4 shows a front view (right) and a side view (left) illustrating the effect of buckling on conventional solutions for stabilising solar panels.
Figure 5 shows the tension spring assembly of the invention, with a compression spring and two ties having a rectangular cross-section.
Figure 6 shows the tie having a rectangular cross-section of figure 5 in profile view.

### Detailed description of an exemplary embodiment

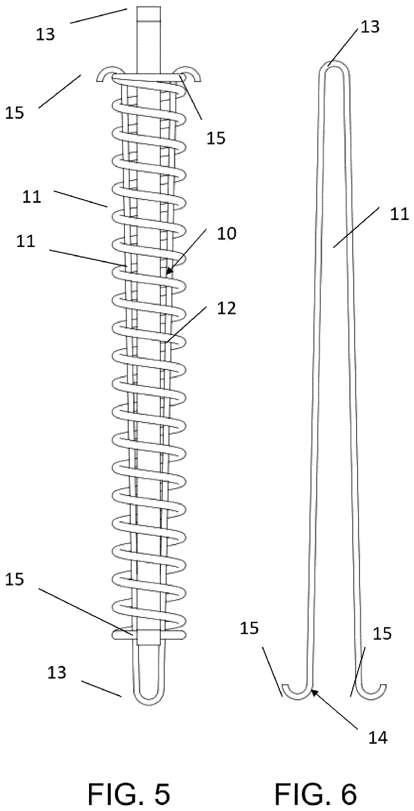

A detailed description of a preferred exemplary embodiment of a tension spring assembly, intended for a non-limiting exemplary application of stabilising solar panels, is provided below with the aid of the aforementioned figures 5-6.

The assembly comprises a compression spring (10) and at least one wire tie (11) having a rectangular cross-section, generally one or two ties (11), preferably two ties (11), as illustrated in figures 5-6, wherein figure 5 shows the assembly of the invention in a final state, i.e. assembled in the solar panel systems. In the preferred embodiment illustrated by the figures, the assembly comprises two wire ties (11) having a rectangular cross-section.

Moreover, figure 5 also shows an example of the compression spring (10), the main component of the assembly, taken directly from the machine, i.e. fresh produced. The compression spring (10) may have values for wire diameter, outer diameter, inner diameter, number of coils (12) and material, which depend on the required load specifications, in particular for wind-driven movements of the solar panels.

Additionally, figure 5 also shows the relationship between the tie (11) or ties (11) and the compression spring (10). In particular, the tie (10) or ties (10) are housed in the compression spring (10), and comprise:
- a first closed end (13) protruding from one end of the compression spring (10); and
- a second open end (14), open at two hooks (15), for hooking onto the other end of the compression spring (10), for example, to a coil (12), preferably an end coil (12), of the compression spring (10).

Lastly, figure 6 shows an example of a tie (11) made of plate having a rectangular cross-section, which constitutes the internal support of the compression spring (10), to transform the compression of said compression spring (10) into mechanical tension work, supporting the swaying generated by the wind in the solar panel systems and preventing the buckling of said systems in operation.

For this assembly of the invention, the conventional hooks (2) are advantageously replaced by the aforementioned ties (11) having a rectangular cross-section, as this provides better seating of the ends of the compression spring (10) and prevents angular displacement of the ties (11) on the end of the compression spring (10). This reduces the tendency to buckling, without increasing the cost of existing systems, even providing some cost reduction.

### List of references

- 1: Conventional tension spring
- 2: Conventional hooks
- 3: Conventional compression spring
- 4: Conventional ties having a circular cross-section
- 5: Conventional coils
- 10: Compression spring of the invention
- 11: Ties having a rectangular cross-section of the invention
- 12: Coils of the compression spring of the invention
- 13: First, closed, end of the tie(s)
- 14: Second, open, end of the tie(s)
- 15: Hooks on the second end of the tie(s)

## Claims

1. A tension spring assembly, **characterised in that** it comprises:
- a compression spring (10); and
- one or two wire ties (11) having a rectangular cross-section, housed in the compression spring (10), and provided with:
- a first end (13), which is closed, and protrudes from one end of the compression spring (10); and
- a second end (14), which is open at two hooks (15), for hooking onto the other end of the compression spring (10).

2. The tension spring assembly, according to claim 1, wherein the hooks (15) hook onto a coil (12) of the compression spring (10).

3. The tension spring assembly, according to claim 2, wherein the hooks (15) hook onto an end coil (12) of the compression spring (10).
